# EUROPÄISCHE PATENTSCHRIFT

(11) **EP 0 643 659 B1**
(45) Veröffentlichungstag und Bekanntmachung des Hinweises auf die Patenterteilung: **29.12.1999**
(21) Anmeldenummer: 93912841.9
(22) Anmeldetag: 01.06.1993
(51) Int. Cl.: B64B 1/08

(54) **LUFTSCHIFF FÜR DEN GÜTER- UND PERSONENTRANSPORT**
AIRSHIP FOR THE TRANSPORT OF GOODS AND PASSENGERS
DIRIGEABLE POUR LE TRANSPORT DE VOYAGEURS ET DE MARCHANDISES

(30) Priorität: 03.06.1992 DE 4218239; 03.06.1992 DE 4218240; 03.06.1992 DE 4218241
(43) Veröffentlichungstag der Anmeldung: 22.03.1995
(73) Patentinhaber: Gelhard, Theresia, 53909 Zülpich-Dürscheven (DE)
(72) Erfinder: GELHARD, Egon, D-5352 Zülpich-Dürscheven (DE)
(74) Vertreter: Rehders, Jochen, Dipl.-Ing.
(86) Internationale Anmeldenummer: EP9301369
(87) Internationale Veröffentlichungsnummer: WO9324364

(56) Entgegenhaltungen:
- DE-A- 2 145 869
- DE-A- 2 659 401
- DE-A- 3 508 101
- DE-A- 3 633 143
- FR-A- 642 809
- FR-A- 1 595 932
- FR-A- 2 132 610
- FR-A- 2 662 995
- GB-A- 483 606
- GB-A- 997 678
- GB-A- 2 055 728
- GB-A- 2 254 833
- US-A- 2 550 018
- US-A- 2 874 431
- US-A- 4 014 483

## Beschreibung

Die Erfindung betrifft ein Luftschiff für den Güter- und Personentransport, das als Verbundstarrluftschiff ausgebildet und Dank seiner Bauart geeignet ist, als größeres Transportmittel besondere Güter und Lasten zu transportieren, die sich nur schwer oder gar nicht mit anderen Transportmitteln befördern lassen. Des weiteren ist ein solches Luftschiff geeignet, im allgemeinen Fracht- und Personenverkehr eingesetzt zu werden, um diese Güter und/oder Personen in entlegene Gebiete ohne Infrastruktur zu transportieren.

Als Starrluftschiffe ausgebildete Luftschiffe, wie beispielsweise in der GB-A-997 678 beschrieben, weisen einen aus Knotenkörpern und mit Aufnahmen der Knotenkörper verbundenen Ring- und Längsträgern gebildeten Gitterrumpf und an den Knotenkörpern angreifende, die Ring- und Längsträger an den Knotenkörpern verspannende Spannseile, die mit dem Gitterrumpf ein Raumfachwerk bilden, einen Nutzlastraum im unteren Bereich des Gitterrumpfs, im Bereich des Bugs die Führerräume mit allen betriebsnotwendigen Einrichtungen, Systeme und Ausrüstungen und im Bereich des Hecks die Triebwerke auf.

Mit einem derartigen Gitterrumpf versehene starre Luftschiffe wurden ursprünglich aus zusammengenieteten Aluminiumprofilen hergestellt, wobei die Ring- und Längsträger als Dreieckfachwerkträger ausgebildet wurden. Die Felder zwischen den Knotenpunkten der Ring- und Längsträger und die Ebenen der Hauptgerüstringe wurden durch Drähte verspannt, um einen auch gegen Querkräfte möglichst widerstandsfähigen Gitterrumpf zu erhalten und um die Auftriebskräfte der Gaszellen und die Belastung durch die Nutzlast möglichst gleichmäßig in den Gitterrumpf einzuleiten und über die ganze Länge zu verteilen. Die Herstellung eines solchen Gitterrumpfs ist äußerst aufwendig und erfordert große handwerkliche Fertigkeiten und Erfahrung, so daß eine wirtschaftliche Herstellung eines großen Luftschiffs für den Gütertransport mit einem derartigen Gitterrumpf heutzutage unwirtschaftlich wäre.

In der deutschen Offenlegungsschrift 26 59 401 ist ein Luftschiff beschrieben, dessen aus Knotenstücken und im wesentlichen rhombisch zwischen beabstandeten Gerüstringen angeordneten rohrförmigen Längsträgern bestehender Gitterrumpf ohne räumliche Drahtverspannung auskommen soll. Allenfalls können sich zwischen den rhombischen Gitterrumpfelementen Spannkabel in Richtung der Luftschiffachse erstrecken. Beiderseits des Gitterrumpfs sind in Längsrichtung verlaufende Luftkammern angeordnet, die wie eine Membran wirken und die Beanspruchungen über einen großen Bereich des Luftschiffs verteilen sollen. Die durch das Aufblasen der Luftkammern in der äußeren Hülle entstehenden Zugkräfte sowie die von außen wirkenden Kräfte sollen durch besonders geformte Verbindungsstreifen direkt und indirekt in die Knotenbereiche des Gitterrumpfs geführt werden, wo diese Streifen mit dem Gitterrumpf verbunden sind und sollen von dort zur inneren Hülle durch Bänder gelangen, wo sie durch Spannringe weitere Streifen und Membranen, die als Spannringe wirken, absorbiert werden sollen und wo ihnen von diesen Widerstand entgegengebracht wird. Die Verbindungsstreifen sollen als Versteifungaringe für das Luftschiff wirken und ferner der Verteilung der Beanspruchung zur Membranhülle dienen. Die meisten Kräfte, denen das Luftschiff unterworfen ist, sollen daher durch die Membranhülle statt durch den Gitterrumpf aufgenommen werden. Hieraus ergibt sich, daß dieses bekannte Luftschiff allenfalls als halbstarr anzusehen ist, wodurch erhebliche Beschränkungen in der erreichbaren Gesamtgröße gegeben sind.

Des weiteren bestehen die Knotenkörper aus kompliziert geformten, zusammengeschraubten und -genieteten Einzelelementen, so daß der Zusammenbau des Gitterrumpfs dieses bekannten Luftschiffs dieselben Probleme aufwirft wie der des eingangs erwähnten Starrluftschiffs.

Die Auftriebserzeugung erfolgt durch ein in Traggaszellen angeordnetes Traggas, nämlich Wasserstoff bzw. vorzugsweise das unbrennbare Helium. Die Größe des Auftriebs ergibt sich aus dem archimedischen Prinzip, wonach der Auftrieb gleich dem Gewicht der verdrängten Luftmenge ist. Bei einem spezifischen Gewicht von Luft bei Normaldruck und Normaltemperatur von 1,292 kg je m³ und einem entsprechenden spezifischen Gewicht von Helium von 0,178 kg je m³ ergibt sich bei einer Füllung der Traggaszellen mit Helium ein Auftrieb von rund einem Kilogramm je m³ Zellenvolumen. Aufgrund des abnehmenden Luftdrucks mit größerer Steighöhe ist es bei üblichen Luftschiffen notwendig, in größeren Höhen Traggas abzulassen, um die Auftriebszunahme auszugleichen und um ein Aufblähen und ggf. Platzen der Traggaszellen zu vermeiden. Auch Temperaturschwankungen führen zu Veränderungen im Auftrieb, die ausgeglichen werden müssen. Schließlich führt auch der Kraftstoffverbrauch während des Fluges zu einer Veränderung des Auftriebs, der sich auf unterschiedliche Weise ausgleichen läßt. So wurde bereits vorgeschlagen, aus den Auspuffgasen der Antriebsmotoren Kondenswasser als Ballast zu gewinnen. Ebenso ist es möglich, als Treibstoff ein Gas zu verwenden, das etwa das spezifische Gewicht von Luft aufweist und beim Verbrauchen keine Auftriebsveränderung nach sich zieht. Besonders schwierig zu handhaben sind die Belastungsänderungen des Luftschiffs beim Beladen und Entladen, wenn man daran denkt, daß Lasten bis zu 200 t mit Luftschiffen moderner Bauart transportiert werden können.

Aus konstruktiven Gründen ist es bei derartigen Luftschiffen vorteilhaft, die Massenverteilung möglichst gleichmäßig entlang der gesamten Kiellinie des Rumpfes zu konzentrieren. Dementsprechend können entlang der Kiellinie zunächst im Bereich des Bugs die Führerräume mit allen betriebsnotwendigen Einrichtungen, Systemen und Ausrüstungen und anschließend die Nutzlasträume angeordnet sein. Lediglich die Triebwerke müssen konstruktionsbedingt im Bereich des Hecks bzw. in Gondeln seitlich des Rumpfes angeordnet werden.

Der Erfindung liegt die Aufgabe zugrunde, ein Luftschiff der eingangs erwähnten Art dahingehend zu verbessern, daß es sich bei einfacher, dennoch einen geringen Luftwiderstand aufweisender Formgebung mit geringem Aufwand aus wenigen, weitgehend genormten Bauteilen herstellen läßt und bei geringem Eigengewicht eine hohe Nutzlast aufnehmen kann und dabei eine ausreichend steife Struktur aufweisen. Des weiteren soll sich der Auftrieb auf einfache Weise an die barometrische Höhe, die Temperatur, den Kraftstoffverbrauch sowie an den Beladungszustand anpassen lassen und sich das Luftschiff nach der Landung bequem und schnell be- und entladen lassen.

Ausgehend von dieser Aufgabenstellung wird erfindungsgemäß vorgeschlagen, daß die Ring- und Längsträger als geschlossene Dreieck-Hohlprofile gestaltet und in bzw. auf entsprechende, in Längs- und Umfangsrichtung des Gitterrumpfs verlaufende Aufnahmen ein- bzw. aufgesteckt sind, daß jeweils eine Basis der Dreieck-Hohlprofile zur Außenseite des Gitterrumpfs weist und daß die Ecken der zur Außenseite weisenden Basis der Längsträger mit sich nach innen erweiternden Längsschlitzen versehen sind, die mit entsprechenden Längsschlitzen an den Außenseiten der Knotenkörper fluchten und in die Längsschlitze mit Randwülsten versehene, die Luftschiffkörperhülle bildende Bahnen eingezogen sind.

Durch die konstruktive Auflösung des Gitterrumpfs in wenige, weitgehend genormte Bauteile, wie die Knotenkörper, die Ringträger, die Längsträger und die Spannseile, die sich kostengünstig in großer Stückzahl serienmäßig herstellen lassen, ist es möglich, den Gitterrumpf in beliebiger Größe schnell und einfach zu montieren. Sowohl die Ring- und Längsträger als auch die Spannseile lassen sich in ihrer Länge vorbestimmen und vorteilhafterweise genau und mit geringer Toleranz auf diese Länge zuschneiden, so daß sich beim Einhaken der Spannseile die geforderte Vorspannung ergibt.

Die in die Gerüstkonstruktion des Gitterrumpfs einbezogenen Bahnen der Luftschiffkörperhülle verbessern die Stabilität des Gitterrumpfs und bilden eine vollkommen glatte, strömungsgünstige Außenfläche, die bis auf die Bug- und Heckkappe des Luftschiffs nur zweidimensional gewölbt ist und sich daher auf einfache Weise und kostengünstig herstellen und montieren läßt. Diese Bahnen lassen sich mit den Randwülsten problemlos in den Längsschlitzen abdichten, so daß sich die gesamte Luftschiffkörperhülle weitgehend luftdicht gestalten und unter einen leichten Überdruck bringen läßt. Hierdurch wird die Formstabilität des Luftschiffkörpers zusätzlich unterstützt und ein Flattern der Luftschiffkörperhülle im Luftstrom vermieden.

Vorzugsweise können die Knotenkörper einstückig aus in einer Ebene unter einem Winkel von 90° angeordneten Aufnahmen für die Dreieck-Hohlprofile und die nach innen gerichteten Ecken überragenden Rippen mit Einhängeösen für die Spannseile sowie etwa in der Ebene der Hülle liegenden, die Bereiche der Ecken der zur Außenseite weisenden Basis der Aufnahmen für die Dreieck-Hohlprofile verbindenden Rippen mit Einhängeäsen für die Spannseile gebildet sein. Diese Knotenkörper sind fast über den gesamten Bereich des Gitterrumpfs völlig gleich und lassen sich auf einfache Weise als Guß-, Spritzguß- oder Preßteile herstellen, wobei die Struktur und die Festigkeit des verwendeten Materials der Beanspruchung entsprechen müssen. Vorzugsweise können die Knotenkörper daher aus faserverstärktem Kunststoff bestehen, wobei die Faserverstärkung aus den unterschiedlichsten, bekannten, hochfesten Fasern bestehen kann. Hierdurch lassen sich die Einhängeösen für die Spannseile direkt an die Knotenkörper anformen.

Die Knotenkörper können vorzugsweise mit den Ringträgern und den Spannseilen verspannte, mehreckige Gerüstringe bilden, wobei die Verspannung in der Gerüstringebene von Knoten zu Knoten so geführt ist, daß ein etwa das äußere Drittel der Ringfläche überspannendes Netz von sich kreuzenden Spannseilen vorhanden ist, das die inneren zwei Drittel des Durchmessers des Ringes frei läßt. Diese Anordnung spart Gewicht, gewährleistet eine ausreichende Flexibilität und verhindert, daß einzelne Spannseile bei Punktbelastungen überbeansprucht werden.

Die im Gitterrumpf zwischen je vier, zwei Ringträger und zwei Längsträger aufnehmenden Knotenkörpern gebildeten Felder werden durch zwei diagonal verlaufende Spannseile stabilisiert.

Der gesamte Gitterrumpf läßt sich somit durch Zusammenstecken der Ring- und Längsträger mit den Knotenkörpern montieren, wobei der Zusammenhalt und die genaue Ausrichtung der zusammengesteckten Teile durch die Spannseile gewährleistet ist, die vorzugsweise aus hochfesten Kunststoffaserseilen bestehen, die maschinell und rechnergesteuert genau auf die für die geforderte Vorspannung benötigte Länge geschnitten und mit Haken zum Einhaken in die Einhängeösen versehen sind. Mit diesen Elementen lassen sich Gitterrümpfe für äußerlich ähnliche Luftschiffe in unterschiedlichen Größen herstellen.

Im unteren Bereich des Gitterrumpfs läßt sich ein als selbsttragende Gitterkonstruktion ausgebildeter Nutzlastraum anordnen, der sich über den größten Teil der Länge des Luftschiffs erstreckt und zu einer zusätzlichen Stabilität des Gitterrumpfs beiträgt.

Der Gitterrumpf besteht vorzugsweise aus drei geometrisch einfachen Teilen, nämlich aus einem parabolischen, sich über etwa 15 % der Gesamtlänge erstreckenden Bugteil, einem sich daran stufenlos anschließenden, sich zum Heck mit einem Öffnungswinkel von 1° bis 8° erweiternden, kegelstumpfförmigen, sich über etwa 60 % der Gesamtlänge erstreckenden Mittelteil und einem sich daran mit einer Abreißkante anschließenden, sich zum Heck mit einem Winkel von 12° bis 28° kegelstumpfförmig verjüngenden, sich über etwa 25 % der Gesamtlänge erstreckenden Heckteil, die sich problemlos herstellen lassen und dennoch einen sehr günstigen Luftwiderstandsbeiwert ergeben. Untersuchungen haben gezeigt, daß durch die kegelstumpfförmigen über eine Abreißkante verbundenen Bereiche in Verbindung mit einem gegenläufigen Heckpropellerpaar eine erhebliche Verringerung des Luftwiderstandsbeiwerts gegenüber früheren zigarrenförmigen und späteren aerodynamisch tropfenförmigen Luftschiffkörpern erreichbar ist.

Am Heck kann ein Paar gegenläufige, koaxiale, den Hauptvortrieb erzeugende Heckpropeller angeordnet sein, während am Anfang und am Ende des Mittelteils zwei Paar seitliche, schwenkbare Propellergondeln angeordnet sein können, die aufgrund ihrer Schwenkbarkeit zu einer erheblich verbesserten Manövrierfähigkeit des Luftschiffs führen. Im Bereich der Propellergondeln können sich auch einziehbare Fahrwerksbeine und Ankerseile befinden.

Um die Kräfte der Propellergondeln, des Fahrwerks und der Ankerseile problemlos in den Gitterrumpf einleiten zu können, können verstärkte, doppelte Gerüstringe in der Ebene der Propellergondeln angeordnet sein.

Ebenso wie die Knotenkörper und die Spannseile können auch die Ring- und Längsträger aus faserverstärktem Kunststoff bestehen und ggf. zur Gewichtserleichterung gelocht sein.

Die die Luftschiffkörperhülle bildenden Bahnen können ebenfalls aus Kunststoff mit wenigstens in die Randwülste eingelagerten Verstärkungsfasern bestehen. Die Randwülste können dabei mit den Kunststoffbahnen verschweißt sein.

Je nachdem, mit welchem Abstand die Gerüstringe im Gitterrumpf angeordnet werden, können im Bereich zwischen den Gerüstringen an den Längsträgern Muffen zum Einstecken von Hilfsringe bildenden Rohrstücken angeordnet sein, die die Längsträger und die Gaszellen stabilisieren.

Da die Spannseile, wie bereits erwähnt, mit ihren Haken bereits die für die geforderte Vorspannung nötige Länge aufweisen, muß eine Möglichkeit gegeben sein, sie unter Spannung in die Einhängeösen der Knotenkörper einzuhängen. Zu diesem Zweck können die Spannseile mittels Muffen an den Haken befestigt sein und diese Muffen Querflansche für das Ansetzen einer Spannvorrichtung aufweisen. Die an den Querflanschen angreifende Spannvorrichtung kann vorteilhafterweise aus einem Gehäuse mit parallelen Wangen und einem von den Wangen vorragenden, in die Einhängeösen der Knotenkörper einsetzbaren Widerlagerbügel sowie einem gegen das Gehäuse schwenkbaren Spannhebel mit mittels Zapfen in Führungsschlitzen in den Wangen geführten Lenkern bestehen, wobei die Zapfen den Querflansch eines Hakens hintergreifen. Die Spannvorrichtung hängt somit mittels des Widerlagerbügels in einer Einhängeöse, so daß sich ein Haken mittels des Spannhebels bis in den Bereich der Einhängeöse bewegen und dort einhängen läßt. Danach wird die Spannvorrichtung entfernt.

Die Führungsschlitze können U-förmig gebogen sein, wodurch der Haken beim Spannen des Spannhebels bis in den Bereich der Einhängeöse gebracht und beim Weiterbewegen des Spannhebels in die Einhängeöse eingehängt wird. Um dies zu erreichen, können die Lenker am Spannhebel in Langlöchern gelagert sein, die während der Einhängbewegung des Hakens in die Einhängeöse eine Rückwärtsbewegung der die Querflansche des Hakens hintergreifenden Zapfen und der Lenker gestatten.

Da der Auftrieb gleich dem Gewicht des von den Traggaszellen verdrängten Luftvolumens ist, ändert sich der Auftrieb, wenn das Volumen der Traggaszellen verändert wird. Das Volumen der Traggaszellen läßt sich durch Einziehen von in den Traggaszellen angeordneten Seilverspannungen verändern.

Zwar steigt der Druck in den Traggaszellen durch die Volumenverkleinerung, jedoch wirkt dies unterstützend im Sinne einer Auftriebsverminderung, da das spezifische Gewicht des Traggases bei einer Drucksteigerung zunimmt, was zu einer zusätzlichen Auftriebsverminderung führt.

Nimmt man für eine überschlägige Betrachtung an, daß ein Luftschiff mit einer Tragfähigkeit von 200 t einen Gasinhalt von 400000 m³ benötigt, so bedeutet dies, daß ein Auftrieb von insgesamt 400 t vorhanden ist, da man mit 1 t Auftrieb je 1000 m³ Gasinhalt rechnen kann. Das Eigengewicht des Luftschiffs liegt daher in derselben Größenordnung wie die Nutzlast. Will man die gesamte Nutzlast durch Verminderung des Traggaszellenvolumens ausgleichen, bedeutet dies, daß das Volumen auf etwas mehr als die Hälfte vermindert werden muß. Dies erscheint technisch ohne weiteres möglich, da sich der Innendruck der Traggaszelle bei einer Volumenverminderung auf nicht ganz die Hälfte auf weniger als den doppelten ursprünglichen Druck erhöht. Da die Traggaszellen am Boden mit Atmosphärendruck gefüllt werden, um den Auftrieb von 1 t je 1000 m³ Zellenvolumen zu erreichen, bedeutet dies, daß eine Verminderung des Volumens auf etwas mehr als die Hälfte des ursprünglichen Volumens eine Druckerhöhung auf weniger als 2 bar bedeutet, was mit den heute verfügbaren Materialien, die sich für Traggaszellen einsetzen lassen, ohne weiteres zu erreichen ist. Zu beachten ist im übrigen, daß ja niemals die gesamte Tragfähigkeit plötzlich und kurzfristig ausgeglichen werden muß, da man immer bestrebt sein wird, ein Luftschiff gleichzeitig zu entladen und zu beladen, so daß ein ständiger Ausgleich erfolgt.

Das Volumen der Traggaszellen läßt sich schnell und einfach durch in den Gaszellen im wesentlichen radial und axial verlaufende Seilverspannungen, an die Windenantriebe angreifen, verstellen, indem die Seilverspannung zum Verkleinern des Gaszellenvolumens verkürzt und zum Vergrößern des Traggaszellenvolumens verlängert wird. Diese Seilverspannungen nehmen den größten Teil der durch die Volumenverminderung entstehenden Druckkräfte auf, so daß die Gaszellenhülle und die Seile der Seilverspannung nicht übermäßig beansprucht werden.

Ist kein vollständiger Ausgleich der gesamten Tragfähigkeit des Luftschiffs erforderlich, brauchen nicht sämtliche Traggaszellen mit der Auftriebsausgleichsvorrichtung versehen zu sein, vielmehr genügt es, nur so viele Traggaszellen mit dieser Auftriebsausgleichsvorrichtung auszustatten, wie für den gewünschten Ausgleich benötigt werden.

Um gleichmäßige Beanspruchung der Seile der Seilverspannung zu erreichen, kann der Windenantrieb an den Seilen über Umlenkrollen angreifen.

Vorteilhafterweise können die Gaszellen an den Gerüstringen mittels auf dem Umfang der Gaszellenhülle regelmäßig verteilter, im wesentlichen radial zur Quermittelebene der Traggaszellen gerichteter Spannseile aufgehängt sein und an benachbarten Ringen in einer Längsebene des Luftschiffs aufgehängte Spannseile können jeweils paarweise innerhalb der Traggaszellen mittels eines Seils miteinander verbunden sein, so daß sich diese Seile innerhalb der Traggaszelle über in jedes der Seile eingehängte Ausgleichsrollen radial verspannen lassen. Diese Spannseile sorgen dafür, daß die von den Traggaszellen erzeugten Auftriebskräfte gleichmäßig in den gesamten Umfang der Gerüstringe eingeleitet werden. Die Traggaszellen liegen somit nicht in der oberen Hälfte der Gerüstringe an, sondern werden von diesen Spannseilen schwebend mit gleichmäßigem Abstand zu den Gerüstringen gehalten.

Die Ausgleichsrollen für die Spannseile können an einem in der Quermittelebene der Traggaszelle angeordneten Spannring innerhalb der Traggaszellen oder mittels eines in der Quermittelebene der Traggaszelle angeordneten ringförmigen Spannseils verspannt sein. An diesen Spannring oder dem ringförmigen Spannseil können Umlenkrollen angeordnet sein, über die die Seile der Seilverspannung zum Einstellen des Gaszellenvolumens zum Windenantrieb geführt sind. Dabei kann der Windenantrieb zentrisch und drehtest im Spannring oder dem ringförmigen Spannseil angeordnet sein, wobei dafür Sorge getragen ist, daß sämtliche Seile der Seilverspannung beim Aufwinden gleichmäßig belastet werden, um eine Überbeanspruchung einzelner Seile zu vermeiden. Dabei kann der Windenantrieb unschaltbare Übersetzungen aufweisen, um geringe Auftriebsveränderungen schnell, große, z. B. durch das Entladen bedingte Auftriebsveränderungen langsamer durchführen zu können. Das Einstellen des Auftriebs durch Volumenveränderung der Traggaszellen läßt sich bei jedem Starrluftschiff mit einem Gitterrumpf verwenden.

Der aus verspannten Ringen gebildete, einen Nutzlastraum im unteren Bereich aufweisende Gitterrumpf, kann wenigstens eine eigensteife, befahrbare, am Gitterrumpf absenkbar befestigte, den Boden des Nutzlastraums bildende und diesen abschließende Nutzlastpalette aufweist.

Im hochgezogenem Zustand bildet die Nutzlastpalette den Boden des Nutzlastraums und schließt diesen ab. Die Nutzlastpalette dient gleichzeitig als Versteifung des Nutzlastraums und des Gitterrumpfs, wodurch die Strukturfestigkeit des Luftschiffs erhöht und das Gewicht der auf der Nutzlastpalette aufliegenden Nutzlast gleichmäßig in den Gitterrumpf eingeleitet werden.

Vorteilhafterweise kann der Nutzlastraum als selbsttragende Gitterkonstruktion ausgebildet sein, die als zusätzliches Element an der Verspannung der Ringe des Gitterrumpfs aufgehängt oder in den unteren Teil des Gitterrumpfs integriert sein kann. In beiden Fällen trägt der Nutzlastraum zur Versteifung des Gitterrumpfs bei, insbesondere dann, wenn vorteilhafterweise formschlüssige Verriegelungselemente zwischen den Nutzlastpaletten untereinander, wenn mehrere vorhanden sind, und/oder zwischen den Nutzlastpaletten und der Bodenöffnung des Nutzlastraums vorgesehen sind.

Vorzugsweise kann der Boden des Nutzlastraums durch mehrere, unabhängig voneinander absenkbare Nutzlastpaletten gebildet sein, deren Breite der des Nutzlastraums und deren Länge jeweils dem Abstand zweier benachbarter Ringe des Gitterrumpfs entspricht. Wenn dann jede Nutzlastpalette an ihren vier Ecken an je einem Seil aufgehängt ist und die vier Seile synchron durch Antriebsmittel heb- und senkbar sind, wird erreicht, daß die Lastüberleitung von jeder Nutzlastpalette an die Gitterkonstruktionen des Nutzlastraums und des Gitterrumpfs mit den Abständen der Ringe des Gitterrumpfs zusammenfällt, wodurch eine gleichmäßige Belastung des Luftschiffs erreicht wird.

Vorteilhafterweise können die in Luftschifflängsrichtung erste und/oder letzte Nutzlastpalette als Ein- und Ausfahrrampen ausgebildet sein, so daß ein Be- und Entladen in Längsrichtung durch Fahrzeuge oder mittels Gabelstaplern möglich ist.

Das Be- und Entladen kann jedoch auch quer zur Luftschifflängsachse erfolgen, wobei die Nutzlastpaletten mit Rollenmatten oder ähnlichen Hilfsmitteln ausgerüstet sein können, so daß ein schnelles Entladen zur einen Luftschiffsseite und ein fast gleichzeitiges Beladen von der anderen Luftschiffsseite her erfolgen kann.

Durch das Be- und Entladen von ungefähr gleich schweren Lasten bleibt das Luftschiff stets gleichmäßig belastet, so daß das schiffseitige Ausgleichssystem nicht in Anspruch genommen wird.

Des weiteren ist es möglich, Verankerungselemente zwischen jeweils einer Nutzpalette und dem Landeplatz des Luftschiffs vorzusehen, so daß sich der Belastungszustand des Luftschiffs nicht ändert, auch wenn sich keine Ladung auf der Nutzlastpalette befindet.

Die Erfindung wird nachstehend anhand eines in der Zeichnung dargestellten Ausführungsbeispiels des näheren erläutert. In der Zeichnung zeigen:

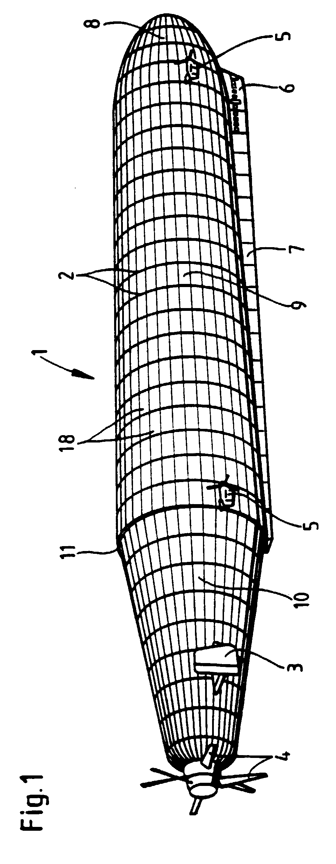

- Fig. 1: eine perspektivische Darstellung eines erfindungsgemäßen Luftschiffs im Fluge,
- Fig. 2: einen schematischen Querschnitt durch den Gitterrumpf des Luftschiffs,

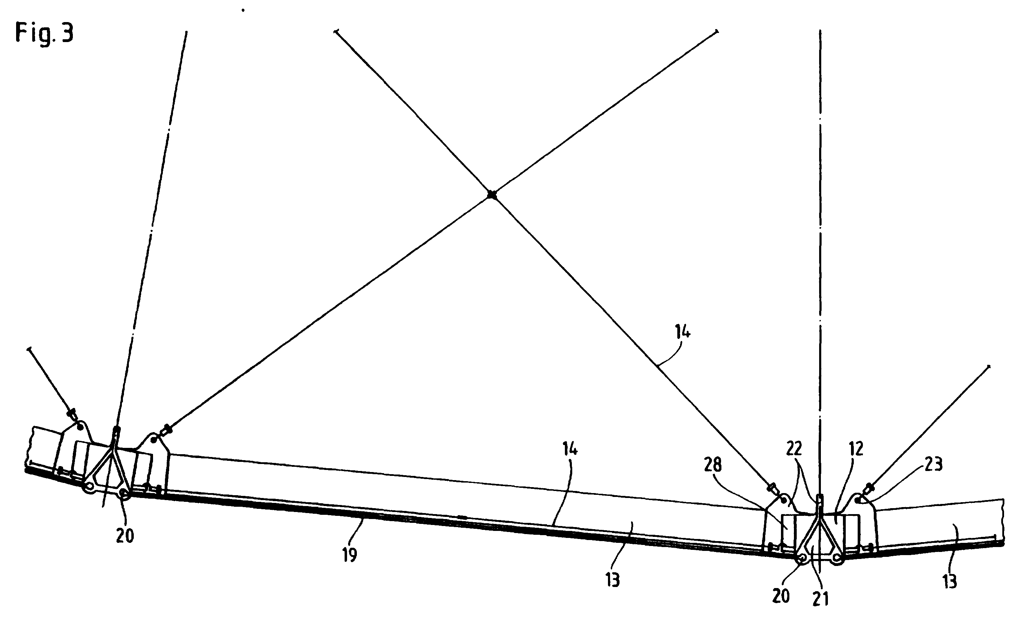

- Fig. 3: eine vergrößerte, ausschnittsweise Darstellung eines Gerüstrings des Gitterrumpfs,

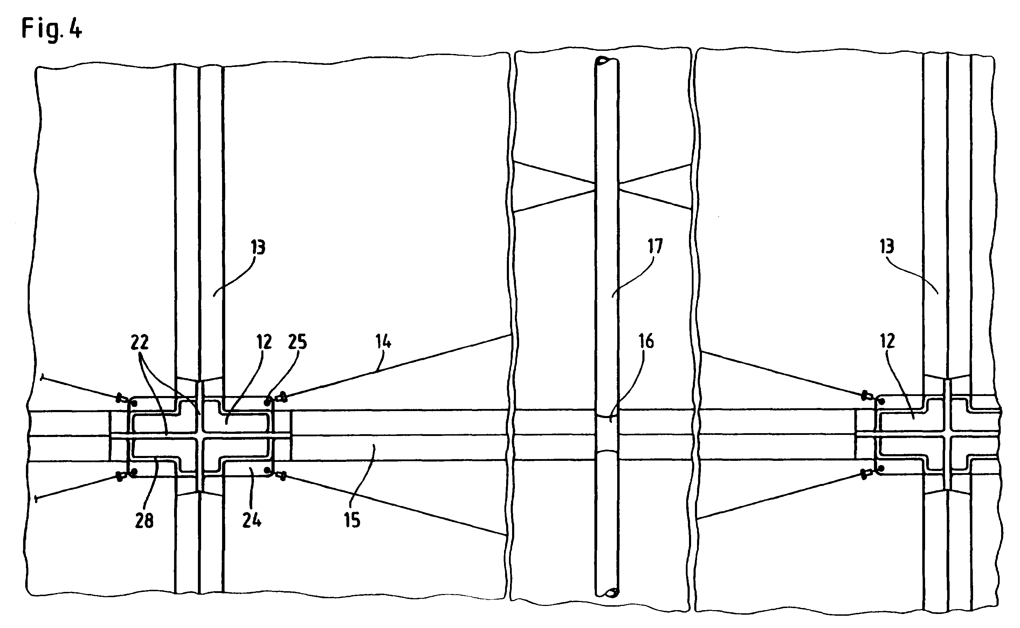

- Fig. 4: eine schematische, auszugsweise Ansicht von innen auf zwei Knotenbereiche des Gitterrumpfs,

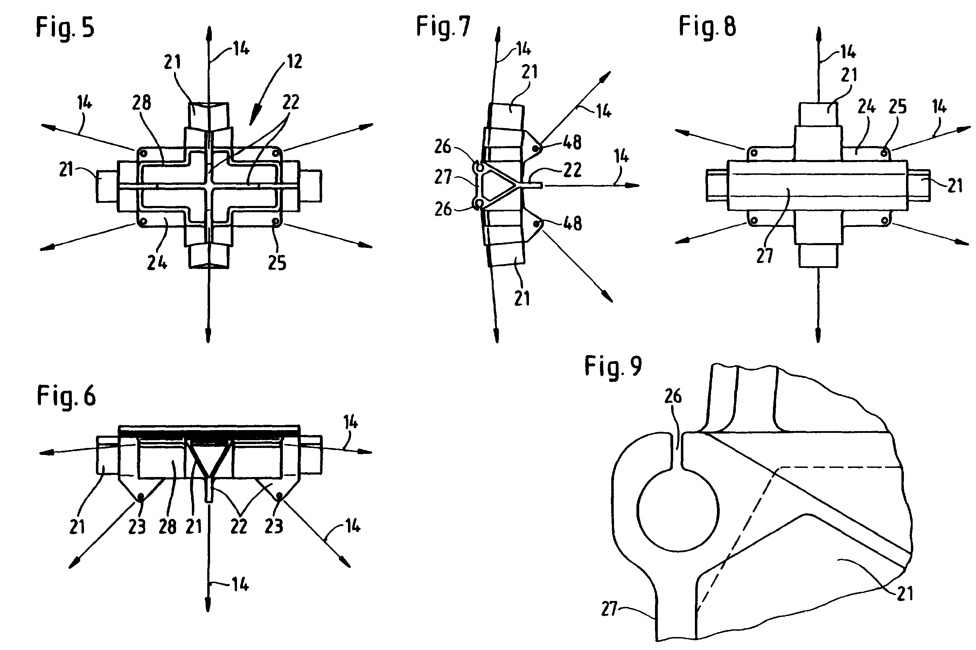

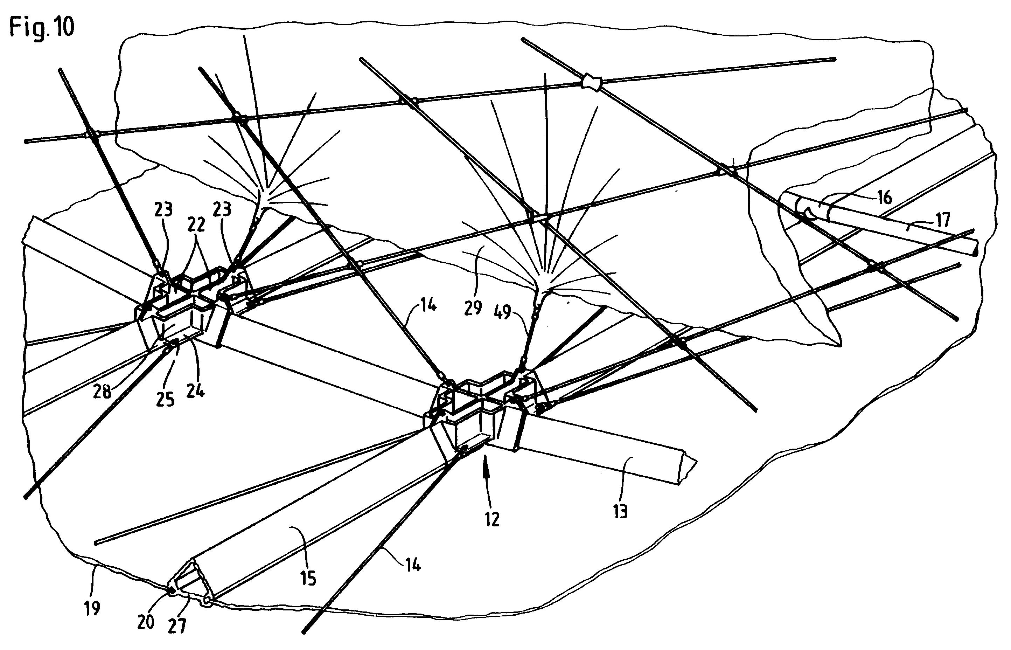

- Fig. 5 bis Fig. 9: verschiedene Ansichten eines für den Zusammenbau des Gitterrumpfs verwendeten Knotenkörpers,
- Fig. 10: eine perspektivische Teilansicht des Innenraums des Gitterrumpfs,
- Fig. 11: eine perspektivische Außenansicht des Luftschiffkörpers, mit teilweiser weggeschnittener Kunststoffbahn,

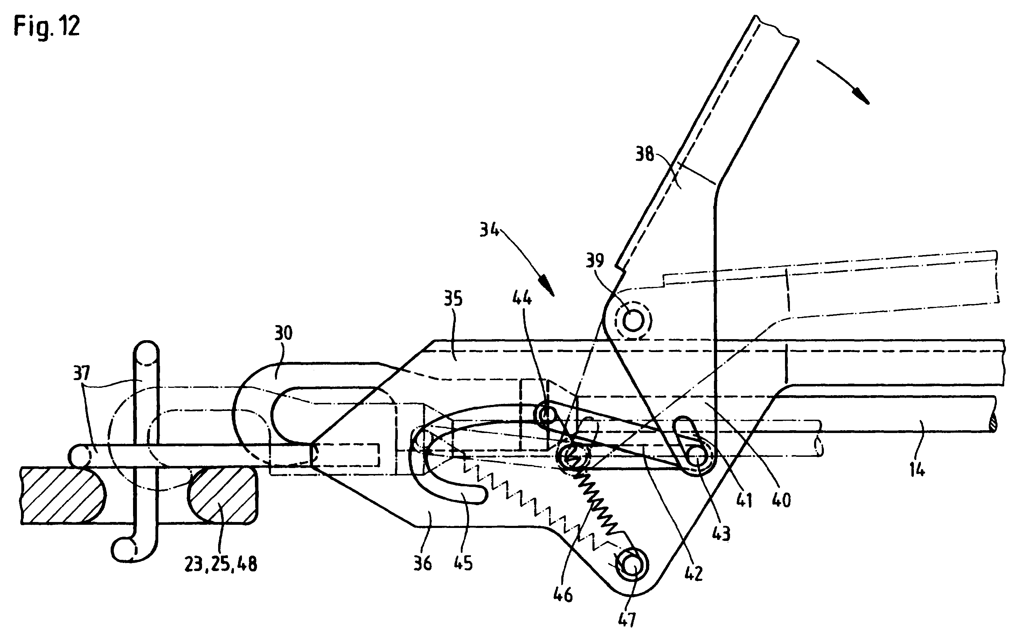

- Fig. 12: eine Seitenansicht einer Spannvorrichtung zum Einhängen eines Spannseils,

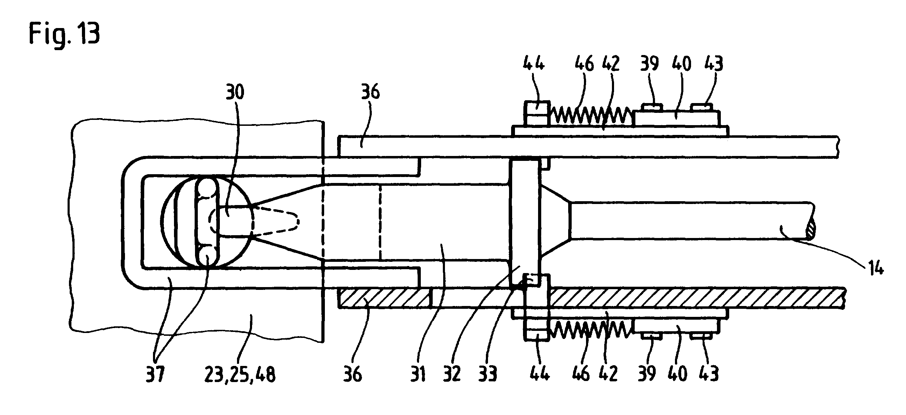

- Fig. 13: eine Draufsicht auf die Spannvorrichtung gemäß Fig. 12,

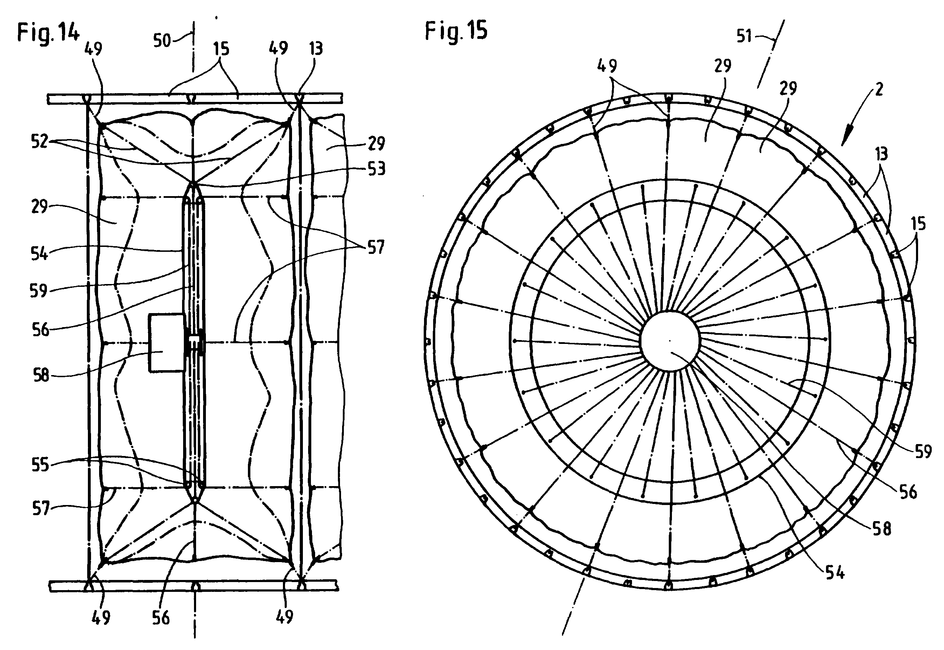

- Fig. 14: einen schematischen, ausschnittsweisen Längsschnitt durch den Gitterrumpf des Luftschiffs mit Darstellung einer Traggaszelle und der Seilverspannung zum Verändern des Traggaszellenvolumens,
- Fig. 15: einen entsprechenden Querschnitt durch den Gitterrumpfs des Luftschiffs und
- Fig. 16: eine vergrößerte perspektivische Darstellung des Be- und Entladevorgangs eines Luftschiffs.

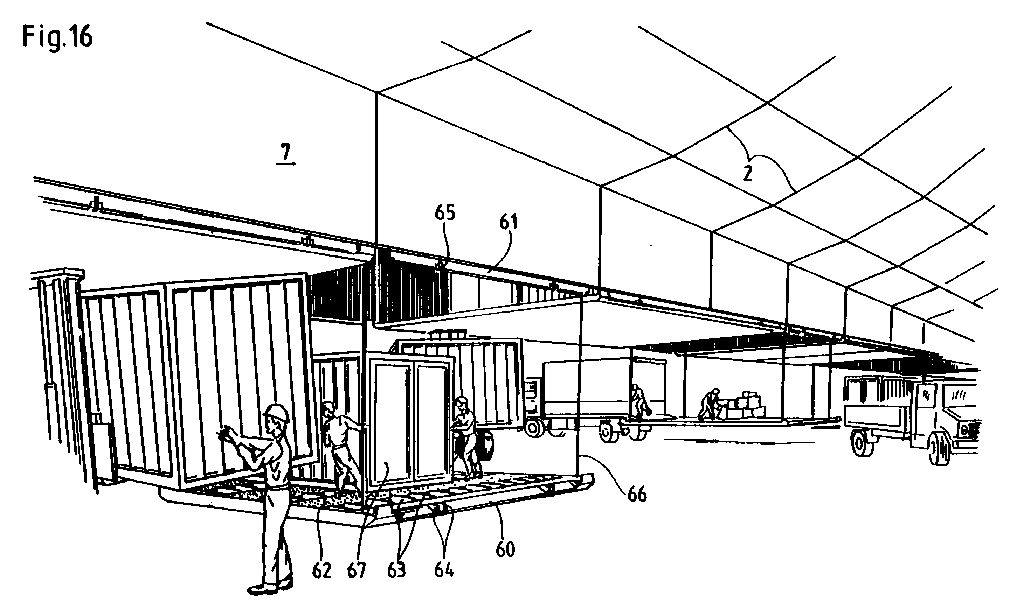

Ein allgemein mit der Bezugsziffer 1 bezeichnetes Luftschiff weist einen aus verspannten Gerüstringen 2 gebildeten Gitterrumpf auf. Am Heck des Luftschiffs 1 befinden sich ein Leitwerk 3 sowie ein Paar gegenläufiger Vortriebspropeller 4, die den Hauptvortrieb für das Luftschiff 1 erzeugen. Seitlich am Rumpf des Luftschiffs 1 sind schwenkbare Propellergondeln 5 angeordnet, die sich so schwenken lassen, daß sich das Luftschiff damit in allen Richtungen manövrieren läßt und im Schwebezustand verharren kann. Am vorderen Ende des Luftschiffs 1 ist in der Kiellinie ein Führerraum 6 angeordnet, der alle betriebsnotwendigen Einrichtungen, Systeme und Ausrüstungen enthält. Im Anschluß an den Führerraum 6 ist ein Nutzlastraum 7 angeordnet, der mit gleichbleibendem Querschnitt über nahezu die gesamte Länge des Luftschiffmittelteils 9 verläuft. Der Boden des Nutzlastraums 7 wird durch einzelne selbsttragende, absenkbare Nutzlastpaletten 60 gebildet, die mit Bezug auf Fig. 16 im einzelnen beschrieben sind. Im Bereich der schwenkbaren Propellergondeln 5 sind nicht dargestellte, einziehbare Fahrwerksbeine und einziehbare Ankerseile angeordnet.

Der Luftschiffkörper besteht aus einem parabolischen Bugteil 8, der sich über etwa 15 % der Gesamtlänge des Luftschiffs erstreckt. An diesen Bugteil 8 schließt sich stufenlos ein kegelstumpfförmiger Mittelteil 9 an, der sich zum Heck mit einem Öffnungswinkel von 1° bis 8° erweitert. Seine Länge beträgt etwa 60 % der Gesamtlänge des Luftschiffs 1. Ein sich zum Heck mit einem Winkel von 12° bis 28° kegelstumpfförmig verjüngender, sich über etwa 25 % der Gesamtlänge erstreckender Heckteil 10 ist an den Mittelteil 9 über eine Abreißkante 11 angeschlossen. Diese Rumpfform mit dem sich kegelstumpfförmig erweiternden Mittelteil 9, der Abreißkante 11 und dem sich kegelstumpfförmig verjüngenden Heckteil ergibt einen verringerten Luftwiderstand, da die Luft in der Grenzschicht bis zur Abreißkante 11 stetig beschleunigt wird und so gleichmäßig um den Luftschiffkörper verteilt bleibt. Diese Grenzschicht wird an der Abreißkante 11 mit Sicherheit abgerissen. Infolge der stufenförmigen Verjüngung an der Abreißkante dringt die Außenströmung in die abgelöste oder stark verzögerte Grenzschicht ein, die dadurch beschleunigt und dünner wird. Es besteht somit entlang dem sich kegelstumpfförmig verjüngenden Heckteil keine Gefahr der Grenzschichtablösung mit einer entsprechenden Widerstandserhöhung.

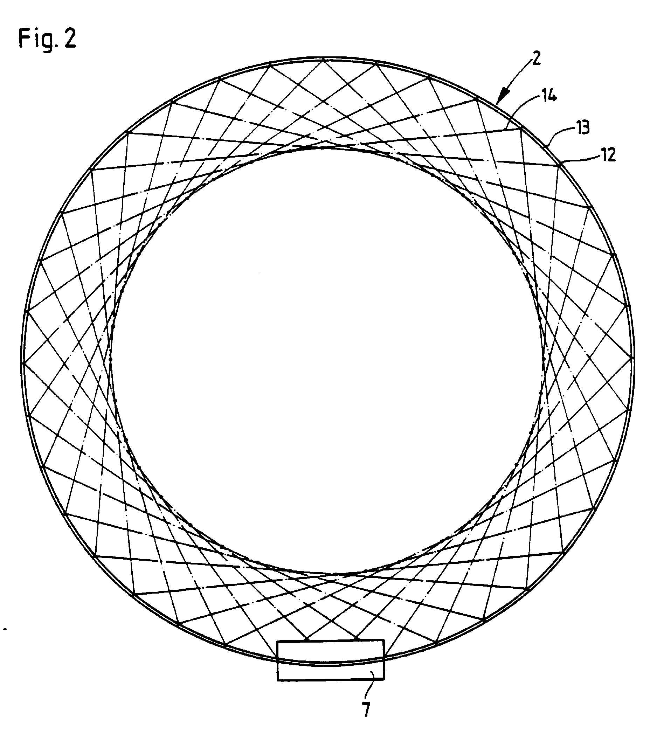

Der in Fig. 2 gezeigte Querschnitt durch den Gitterrumpf läßt angedeutete Knotenkörper 12 erkennen, die mit Ringträgern 13 verbunden sind. Von je einem Knotenkörper 12 zu einem beabstandeten Knotenkörper 12 sind Spanneeile 14 gespannt, die so geführt sind, daß ein etwa das äußere Drittel der Ringfläche überspannendes Netz von sich kreuzenden Spannseilen 14 entsteht. In die Kiellinie des Gerüstrings 2 ist ein Nutzlastraum 7, der als selbsttragende, im einzelnen nicht dargestellte Gitterkonstruktion ausgebildet ist, integriert. Die aus den Knotenkörpern 12 und den Ringträgern 13 gebildeten Gerüstringe 2 werden parallel mittels Längsträgern 15 miteinander verbunden und ergeben je nach Anzahl und Durchmesser der Gerüstringe und Länge der Längsträger 15 einen mehr oder weniger großen Gitterrumpf, wobei sich unterschiedlich große Gitterrümpfe aus gleichen Bauelementen zusammensetzen lassen. Zwischen den Gerüstringen 2 können Hilfsringe angeordnet sein, die aus auf den Längsträgern 15 angeordneten Muffen 16 und in diese eingesteckte Rohrstücke 17 gebildet sind.

Im zwischen je vier, zwei Ringträger 13 und zwei Längsträger 15 aufnehmenden Knotenkörpern 12 gebildeten Feld 18 sind zwei diagonal verlaufende Spannseile 14 angeordnet, die ein Verformen dieser Felder 18 verhindern.

Die als Dreieck-Hohlprofile ausgebildeten Ringträger 13 und Längsträger 15 können auf allen Seiten oder nur auf den zum Innenraum des Gitterrumpfs weisenden Seiten gelocht sein, um dadurch eine Gewichtserleichterung zu erzielen. Die Längsträger 15 sind an den Ecken der nach außen weisenden Basis des Dreiecks mit sich nach innen erweiternden Längsschlitzen 26 versehen, die sich in entsprechenden Längsschlitzen in den Außenseiten der Knotenkörper 12 fluchtend fortsetzen. In diese Längsschlitze 26 lassen sich Randwülste 20 an Kunststoffbahnen 19 einziehen, wodurch die Felder 18 abgedeckt und die Luftschiffkörperhülle gebildet wird.

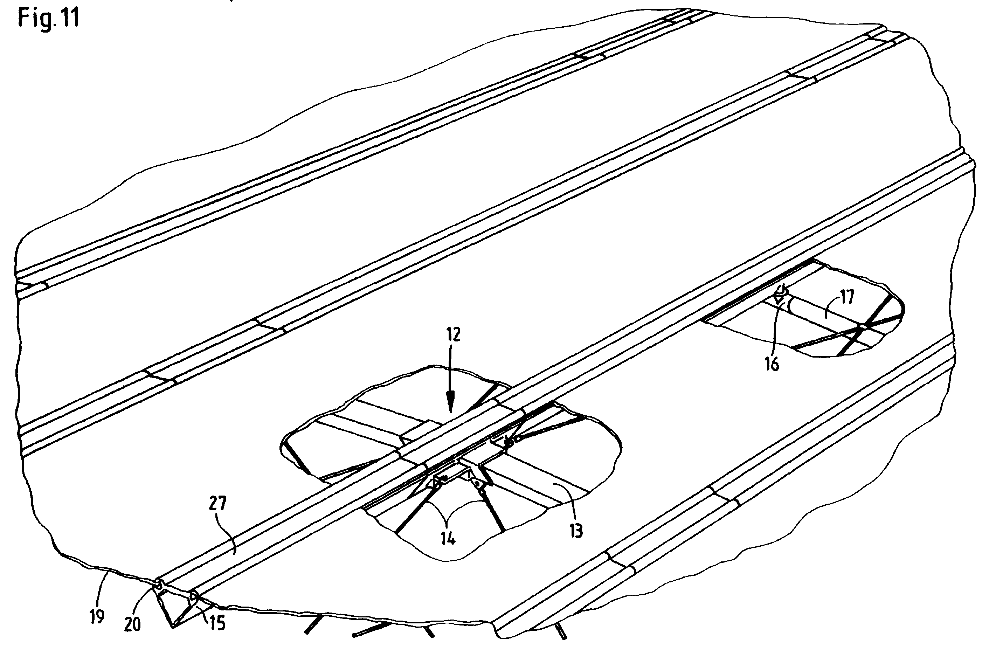

Wie in Fig. 11 erkennbar, erstrecken sich diese Bahnen 19 glattflächig zwischen den Längsträgern 15, die nur in Längsrichtung verlaufende Erhöhungen im Bereich der Längsschlitze 26 aufweisen, so daß die Luftschiffkörperhülle als Ganzes in Fahrtrichtung glattflächig und ohne quer hervorstehende Kanten bis zur Abreißkante 11 verläuft.

Die Bahnen 19 bestehen vorzugsweise aus hochfestem Kunststoff, ggf. faserverstärkt, an deren Ränder die Randwülste 20, in die ebenfalls Verstärkungsfasern eingelagert sein können, angeschweißt sein können. Die Kunststoffbahnen 19 können mit den Randwülsten 20 auch einstückig hergestellt sein.

Durch die Randwülste 20 läßt sich auf einfache Weise bereits eine ausreichende Abdichtung der Kunststoffbahnen 19 in den Längsträgern 15 erreichen. Werden zusätzlich sämtliche Quernähte und Verbindungsstellen an den Knotenkörpern 12 abgedichtet, läßt sich erreichen, daß der Luftschiffkörper als Ganzes im wesentlichen luftdicht ist und sich unter einen leichten Überdruck im Innenraum setzen läßt. Dieser Überdruck verhindert während der Fahrt ein Flattern der Kunststoffbahnen 19 und trägt zusätzlich zur Stabilität des Luftschiffkörpers bei.

Ebenso wie die Ringträger 13 und die Längsträger 15 können die Knotenkörper 12 aus Kunststoff hergestellt sein. Vorzugsweise bestehen die Knotenkörper 12 aus faserverstärktem Kunststoff, so daß alle Elemente der Knotenkörper eine ausreichende Festigkeit erhalten. Jeder Knotenkörper 12 weist vier, unter einem Winkel von 90° angeordneten Aufnahme 21 für die Ringträger 13 und die Längsträger 15 auf. Diese Aufnahmen 21 bestehen aus Rohrfortsätzen mit einem Querschnitt, der dem Innenquerschnitt der als Dreieck-Hohlprofil ausgebildeten Ringträger 13 und Längsträger 15 entspricht. Zur Versteifung der sich kreuzenden Aufnahmen 21 sind auf der Innenseite sich ebenfalls kreuzende Rippen 22 mit Einhängeöse 23 angeordnet. Des weiteren sind in der Ebene der Außenfläche des Knotenkörpers 12 weitere Rippen 24 angeordnet, die ebenfalls Einhängeösen 25 aufweisen. Durch senkrecht von den Rippen 24 aufragende weitere Rippen 28 wird zusätzlich eine kastenförmige Verstärkung gebildet.

Die Aufnahmen 21 für die Ringträger 13 sind unter einem leichten Winkel zur Ebene der Aufnahmen 21 für die Längsträger 15 geneigt und zwar entsprechend dem Winkel, den die Ringträger 13 des ein Vieleck darstellenden Gerüstrings 2 zum jeweiligen Radius bilden. Jeder Knotenkörper 12 weist insgesamt acht Einhängeösen 23, 25, 48 auf, von denen die Einhängeösen 23 zum Verspannen benachbarter Gerüstringe 2, die Einhängeösen 25 zum Verspannen der Felder 18 und die Einhängeösen 48 zum Verspannen der Gerüstringe 2 in ihrer Ebene dienen.

Die zum Verspannen dienenden Spannseile 14 bestehen vorzugsweise aus hochfesten Kunststoffasern bzw. aus mit hochfesten Fasern verstärktem Kunststoff und weisen an ihren beiden Enden jeweils einen fest angeordneten Haken 30 auf, der mittels einer Muffe 31 am Spannseilende befestigt ist.

Sowohl die Ringträger 13, die Längsträger 15 als auch die Spannseile 14 werden maschinell und rechnergesteuert genau auf die Länge abgeschnitten, die sie an der Stelle, an der sie eingebaut werden, aufweisen müssen. Dabei wird für die Spannseile 14 die erforderliche Vorspannung mit berücksichtigt, um die Länge des Spannseils 14 einschließlich der Haken 30 zu bestimmen. Beim Einsetzen der Haken 30 in die entsprechenden Einhängeösen 23, 25, 48 erhält der Gitterrumpf somit die erforderliche Formsteifigkeit, und die Ring- und Längsträger 13, 15 werden unlösbar an den Knotenkörpern 12 verspannt.

Zum Einhängen eines Hakens 30 an einem Spannseil 14 in eine Einhängeöse 23, 25, 48 dient eine Spannvorrichtung 34. Die Spannvorrichtung 34 besteht aus einem Gehäuse 35 mit parallelen Wangen 36. An diesen Wangen 36 ist ein besonders geformter Widerlagerbügel 37 befestigt, der sich in eine Einhängeöse 23, 25, 48 einsetzen läßt, ohne das Einhaken eines Hakens 30 zu behindern.

Am Gehäuse 35 ist ein Spannhebel 38 in einem Schwenklager 39 angelenkt, der sich von Hand oder mechanisch gegen das Gehäuse 35 bewegen läßt. Dabei werden mit dem Spannhebel 38 verbundene Spannpratzen 40 in Richtung der Einhängeöse 23, 25, 48 bewegt. Die die Wangen 36 umgreifenden Spannpratzen 40 sind an ihren Ende mit Langlöchern 41 versehen, in denen parallele Lenker 42 über Zapfen 43 gelagert sind. Diese Lenker 42 sind mit ihren freien Enden mittels Zapfen 44 in U-förmigen Führungsschlitzen 45 in den Wangen 36 geführt. Die Zapfen 44 durchgreifen die Wangen 36 und legen sich hinter halbkreisförmige Ausnehmungen 33 in einem Querflansch 32 an der Muffe 31 des Spannseils 14.

Wird nach dem Einhängen des Widerlagerbügels 37 in die Einhängeöse 23, 25, 48 und Ansetzen des Querflanschs 32 an die Zapfen 44 der Spannhebel 38 in Pfeilrichtung bewegt, wird der Haken 30 in Richtung der Einhängeöse 23, 25, 48 bewegt, während sich die Spannvorrichtung 34 an der Einhängeöse 23, 25, 48 mittels des Widerlagerbügels 37 abstützt. Dabei wird das Spannseil 14 im erforderlichem Maße gespannt. Wenn der Haken 30 in die gestrichelte Stellung gebracht ist, gelangen die Zapfen 44, die sich am Querflansch 32 abstützen, in den zurückgeführten Bereich der U-förmigen Führungsschlitze 44, und die Langlöcher 41 in die gestrichelt dargestellte Stellung. Dadurch bewegt sich der Haken 30 in einer Abwärtsbewegung hinter die Einhängeöse 23, 25, 48, und die Zapfen 44 mit den Lenkern 42 springen unter der Wirkung einer Zugfeder 46, die an den Wangen 36 mittels Zapfen 47 angelenkt ist, nach rückwärts und geben den Haken 30 frei. Damit ist das Spannseil 14 mit der geforderten Vorspannung in die Einhängeösen 23, 25, 48 eingehängt.

An den besonders beanspruchten Stellen des Gitterrumpfs, d. h. in der Ebene der schwenkbaren Propellergondeln 5 befinden sich besonders verstärkte doppelte Gerüstringe 2, die nicht eigens dargestellt sind. Das Leitwerk 3 ist in konventioneller Spanntenbauweise hergestellt und weist durch den Heckteil 10 hindurchgehende Holme auf. Die sich in diesem Bereich befindlichen Gerüstringe sind entsprechend ausgebildet und verstärkt und dienen gleichzeitig zur Aufnahme des hier angeordneten, auf das Paar gegenläufiger Heckpropeller wirkenden Haupttriebwerks.

Die Montage des Luftschiffkörpers läßt sich in der Weise durchführen, daß jeweils die Knotenkörper 12, die Ringträger 13 und die Längsträger 15 der über die Länge des Luftschiffs verlaufenden aufeinanderfolgenden Felder 18 zusammengesteckt und die jeweiligen Diagonalspannseile 14 eingehängt werden. Danach wird das Bauteil um die Längsachse des Luftschiffs gedreht, um den nächsten Abschnitt mit den in Längsrichtung verlaufenden Feldern 18 zu montieren, bis schließlich die Montage des Führerraums 6 und des Nutzlastraums 7 den Abschluß bildet. Die Spannseile 14 in der Ebene der Gerüstringe 2 und die räumlich diagonal verlaufenden Spannseile 14 zwischen benachbarten Gerüstringen 2 werden eingehängt, nachdem der Gitterrumpf einschließlich der Kunststoffbahnen 19 fertig montiert ist.

Auf diese Weise läßt sich der gesamte Luftschiffkörper aus einfachen Einzelelementen zeit- und kostensparend montieren und bietet große Variationsmöglichkeiten hinsichtlich der mit den gleichen Bauelementen herstellbaren Luftschiffe unterschiedlicher Größe.

Die zwischen benachbarten Gerüstringen 2 aufgehängten, gasdichten Traggaszellen 29 sind mittels radial etwa zur Quermittelebene 50 der Traggaszellen 29 gerichteten Spannseilen 49 befestigt. In der ausgezogenen Darstellung weist die Traggaszelle 29 etwa ihr maximales Volumen und damit die größte Tragfähigkeit auf. Es ist ersichtlich, daß durch die große Anzahl schräg gerichteter Spannseile 49 die Auftriebskraft jeder Traggaszelle 29 gleichmäßig in benachbarte Gerüstringe 2 geleitet wird, so daß die Traggaszellenhülle an keiner Stelle an den Gerüstringen 2 oder der Außenhaut des Luftschiffs anliegt und nicht nur die obere Hälfte des Luftschiffs die Auftriebskräfte aufzunehmen hat, sondern besonders die untere Hälfte des Gitterrumpfs zur Verteilung der Auftriebskräfte beiträgt. Von den Befestigungspunkten der Spannseile 49 an der Traggashülle 29 sind diese Spannseile 49 im Inneren der Traggashülle jeweils paarweise in einer radialen Längsebene mittels eines Seils 52 miteinander verbunden, das sich radial verspannen läßt. Dieses radiale Verspannen wird im dargestellten Ausführungsbeispiel durch einen in der Quermittelebene 50 der Traggaszelle 29 angeordneten Spannring 54 bewirkt. Hierbei kann es sich um einen starren Spannring 54 handeln.

Ebenso ist es möglich, die Seile 52 mittels eines in der Quermittelebene 50 der Traggaszellen 29 angeordneten, ringförmigen Spannseils zu verspannen, bei dem es genügt, die Länge mittels eines Spannschlosses zu verkürzen, um die radiale Vorspannung der Seile 52 zu bewirken.

An dem Spannring 54 sind in regelmäßigen Abständen Umlenkrollen 55 angeordnet, über die axial gerichteten Seile 57 umgelenkt und als radial gerichtete Seile 59 zu einem zentrisch und drehtest am Spannring 54 angeordneten Windenantrieb 58 geführt sind. Weitere radial gerichtete Seile 56 sind direkt vom Windenantrieb 58 zu dem in der Quermittelebene 50 liegende Bereich der Traggaszellenhülle geführt und daran befestigt. Werden die Radialseile 56 und die Axialseile 57 mittels des Windenantriebs 58 verkürzt, zieht sich die Traggaszelle 29 in einer Weise zusammen, wie dies strichpunktiert dargestellt ist. Dadurch verringert sich das Volumen der Traggaszelle 29 und ihr Auftrieb vermindert sich. Zwar erhöht sich bei der Volumenverminderung der Druck in der Traggaszelle 29, jedoch sind die dabei auftretenden Belastungen in der Traggaszellenhülle nicht so groß, daß diese Kräfte nicht durch entsprechende Gewebe aus hochfesten Fasern aufgenommen werden könnten. Auch die Seile der Seilverspannung 56, 57 lassen sich in ihrer Anzahl und ihrer Zugfestigkeit so bestimmen, daß sie die auftretenden Kräfte mit Sicherheit aufnehmen.

Alle Traggaszellen 29 des Luftachiffs 1 oder auch nur eine bestimmte Anzahl können mit dem Auftriebsausgleich und den dafür benötigten Windenantrieben 58 ausgestattet sein. Der Antrieb besteht z. B. aus einem Elektromotor, der sich vom Führerstand 6 aus im Sinne einer Vergrößerung oder Verkleinerung des Traggaszellenvolumens steuern läßt. Vorzugsweise wird für die Steuerung eine Automatik eingesetzt, die in Abhängigkeit vom Ladezustand, vom Flugzustand und von den atmosphärischen Bedingungen selbsttätig das Volumen der Traggaszellen 16 einstellt. Die Übersetzung des Windenantriebs 58 kann umschaltbar gestaltet sein, um die Zugkraft dem Volumen und damit dem Innendruck der Traggaszellen 29 anzupassen.

Mit der erfindungsgemäßen Auftriebssteuerung ist es nicht mehr erforderlich, Ballast mitzuführen, Traggas bei bestimmten Flugzuständen abzublasen oder aufwendige Kondensatrückgewinnungsanlagen vorzusehen, da sich sämtliche während des Fluges oder am Boden einstellenden Auftriebsveränderungen durch eine Veränderung des Traggaszellenvolumens ausgleichen lassen.

Mit Bezug auf Fig. 16 ist erkennbar, daß die Breite der Nutzlastpaletten 60 der Breite des Nutzlastraums 7 entspricht, während die Länge mit dem Abstand benachbarter Ringe 2 des Gitterrumpfs übereinstimmt.

Von dem als selbsttragende Gitterkonstruktion ausgebildeten Nutzlastraum 7 sind nur Längsträger 61 dargestellt, mit denen sich die Nutzlastpaletten 60 mittels Verriegelungselementen 64, 65 formschlüssig verriegeln lassen, so daß die Nutzlastpaletten 60 einen wesentlichen Beitrag zur Stabilität und Steifheit des Nutzlastraums 7 sowie des Luftsschiffs 1 insgesamt leisten.

Die Nutzlastpaletten 60 können auch untereinander mit entsprechenden Verriegelungselementen in nicht dargestellter Weise verbunden sein, was die Steifheit in Längsrichtung zusätzlich erhöht. Im abgesenkten Zustand der Nutzlastpaletten 60 können die Verriegelungselemente 64 dazu dienen, mit nicht dargestellten Verankerungselementen am Landeplatz des Luftschiffs 1 verriegelt zu werden, so daß der Schwebezustand des Luftschiffs 1 von der Be- und Entladung der Nutzlastpaletten 60 unbeeinflußt bleibt.

An den vier Ecken einer jeden Nutzlastpalette 60 sind Seile 66 befestigt, die mit nicht dargestellten Antriebsmitteln in Verbindung stehen. Auf diese Weise läßt sich jede Nutzlastpalette 60 unabhängig von anderen Nutzlastpaletten 60 heben und senken.

Werden sämtliche Nutzlastpaletten 60 gleichzeitig abgesenkt, lassen sie sich in Längsrichtung durch Kraftfahrzeuge oder Gabelstapler befahren. Zu diesem Zweck sind auf den Nutzpaletten 60 Fahrspuren 62 angeordnet.

Um das Auf- und Abfahren eines Fahrzeuges zu erleichtern, können die in Luftschiffslängsrichtung erste und/oder letzte Nutzlastpalette 60 in nicht dargestellter Weise als Ein- und Ausfahrrampen ausgebildet sein.

Da die Seiten der Nutzlastpaletten 60 völlig frei sind, lassen sie sich, wie dargestellt, seitlich beladen und entladen. Vorzugsweise werden genormte Container 67 verwendet, die sich mittels in die Nutzlastpaletten 60 integrierter Rollenmatten 63 leicht bewegen lassen und für den Transport durch das Luftschiff 1 auf der Nutzlastpalette 60 festgezurrt werden.

Bei kleinerem Stückgut können in die Nutzlastpaletten 60 Zäune eingesteckt werden und die Beladung kann durch Förderbänder erfolgen. Bei schwerem Stückgut, insbesondere Containern, wird mit Gabelstaplern oder ähnlichem Beladegerät gearbeitet.

Bei einer simultanen Beladung von der einen Luftschiffseite und einer entsprechenden Entladung zur anderen Luftschiffseite hin mit Containern 67, die etwa das gleiche Gewicht aufweisen, ist es nicht erforderlich, die Nutzlastpaletten 60 am Landeplatz zu verankern und wird auch nicht das schiffseitige Lastenausgleichssystem in Anspruch genommen.

Ist für das Luftschiff keine oder nur wenig Rückfracht vorhanden, können auch Container mit Ballast vorgehalten und schnell verladen werden, so daß sich auch in diesem Fall eine Beanspruchung des schiffseitigen Lastenausgleichssystems erübrigt, wodurch eine nicht unerhebliche Energieersparnis erreicht wird.

Mit dem erfindungsgemäßen Luftschiff lassen sich die unterschiedlichsten Güter transportieren, nicht nur solche, die für den Transport auf der Straße, auf der Schiene und mit dem Flugzeug geeignet sind, sondern auch besondere lange und sperrige Güter. Derartige Güter lassen sich nach Entfernen der Nutzlastpaletten direkt an den Längsträgern 61 des Nutzlastraums 7 anhängen.

## Patentansprüche

1. Luftschiff für den Güter- und Personentransport mit einem aus Knotenkörpern (12) und mit Aufnahmen (21) der Knotenkörper (12) verbundenen Ring- und Längsträgern (13, 15) gebildeten Gitterrumpf und an den Knotenkörpern angreifenden, die Ring- und Längsträger an den Knotenkörpern verspannenden Spannseilen (14), die mit dem Gitterrumpf ein Raumfachwerk bilden, **dadurch gekennzeichnet**, daß die Ring- und Längsträger (13, 15) als geschlossene Dreieck-Hohlprofile gestaltet und in bzw. auf entsprechende, in Längs- und Umfangsrichtung des Gitterrumpfs verlaufende Aufnahmen (21) ein- bzw. aufgesteckt sind, jeweils eine Basis (27) der Dreieck-Hohlprofile (13, 15) zur Außenseite des Gitterrumpfs weist und daß die Ecken der zur Außenseite weisenden Basis (27) der Längsträger (15) mit sich nach innen erweiternden Längsschlitzen (26) versehen sind, die mit entsprechenden Längsschlitzen (26) an den Außenseiten (27) der Knotenkörper (12) fluchten und in die Längsschlitze (26) mit Randwülsten (20) versehene, die Luftschiffkörperhülle bildende Bahnen (19) eingezogen sind.

2. Luftschiffnach Anspruch 1, **dadurch gekennzeichnet**, daß die Knotenkörper (12) einstückig aus in einer Ebene unter einem Winkel von 90° angeordneten Aufnahmen (21) für die Dreieck-Hohlprofile (13, 15) und die nach innen gerichteten Ecken überragenden Rippen (22) mit Einhängeösen (23) für die Spannseile (14) sowie etwa in der Ebene der Hülle liegenden, die Bereiche der Ecken der zur Außenseite weisenden Basis (27) der Aufnahmen (21) für die Dreieck-Hohlprofile (13, 15) verbindenden Rippen (24) mit Einhängeösen (25) für die Spannseile (14) gebildet sind.

3. Luftschiff nach Anspruch 1 oder 2, **dadurch gekennzeichnet**, daß die Knotenkörper (12) mit den Ringträgern (13) und den Spannseilen (14) verspannte mehreckige Gerüstringe (2) bilden, wobei die Verspannung in der Gerüstringebene von Knoten zu Knoten so geführt ist, daß ein etwa das äußere Drittel der Ringflache überspannendes Netz von sich kreuzenden Spannseilen (14) vorhanden ist.

4. Luftschiff nach einem oder mehreren der Ansprüche 1 bis 3, **gekennzeichnet durch** einen als selbsttragende Gitterkonstruktion ausgebildeten, im unteren Bereich des Gitterrumpfs angeordneten Nutzlastraum (7).

5. Luftschiff nach Anspruch 4, **gekennzeichnet durch** wenigstens eine eigensteife, befahrbare, am Gitterrumpf absenkbar befestigte, den Boden des Nutzlastraums (7) bildende und diesen abschließende Nutzlastpaletten (60).

6. Luftschiff nach Anspruch 5, **dadurch gekennzeichnet**, daß der Boden des Nutzlastraums (7) durch mehrere, unabhängig voneinander absenkbare Nutzlastpaletten (60) gebildet ist, deren Breite der des Nutzlastraums (7) und deren Länge jeweils dem Abstand zweier benachbarter Ringe (2) des Gitterrumpfs entspricht.

7. Luftschiffnach Anspruch 6, **dadurch gekennzeichnet**, daß die in Luftschifflängsrichtung erste und/oder letzte Nutzlastpalette (60) als Ein- und Ausfahrrampen ausgebildet sind.

8. Luftschiff nach einem der Ansprüche 5 bis 7, **gekennzeichnet durch** Verankerungselemente zwischen jeweils einer Nutzlastpalette (60) und dem Landeplatz des Luftschiffs (1).

9. Luftschiff nach einem der Ansprüche 1 bis 8, **dadurch gekennzeichnet**, daß die die Luftschiffkörperhülle bildenden Bahnen (19) aus Kunststoff mit wenigstens in die Randwülste (20) eingelagerten Verstärkungsfasern bestehen.

10. Luftschiff nach einem der Ansprüche 3 bis 9, **gekennzeichnet durch** innerhalb des Gitterrumpfs an den Gerüstringen (2) mittels auf dem Umfang ihrer Traggaszellenhülle regelmäßig verteilter, im wesentlichen radial zur Quermittelebene (50) gerichteter Spannseile (49) aufgehängte Traggaszellen (29), eine in wenigstens einer Traggaszelle (29) im wesentlichen radial und axial verlaufenden Seilverspannung (56, 57, 59) der Traggaszellenhülle und einen an der Seilverspannung (56, 57, 59) angreifenden Windenantrieb (58) zum Einstellen des Traggaszellenvolumens.

11. Luftschiff nach Anspruch 10, **dadurch gekennzeichnet**, daß die an den Ringen (2) in einer Längsebene (51) an benachbarten Gerüstringen (2) aufgehängte Spannseile (49) jeweils paarweise innerhalb der Traggaszellen (29) mittels eines Seils (52) miteinander verbunden und diese Seile (52) innerhalb der Traggaszellen (29) radial verspannt sind.

12. Luftschiff nach Anspruch 11, **dadurch gekennzeichnet**, daß die Seile (52) mittels eines in der Quermittelebene (50) der Traggaszelle (29) angeordneten ringförmigen Spannseils verspannt sind.

13. Luftschiff nach Anspruch 12, **dadurch gekennzeichnet**, daß an einem Spannring (54) oder dem ringförmigen Spannseil Umlenkrollen (55) angeordnet sind, über die die Seile (56, 57, 59) der Seilverspannung zum Einstellen des Gaszellenvolumens zum Windenantrieb (58) geführt sind.

## Claims

1. An airship for transporting goods and passengers, with a geodetic hull consisting of nodular elements (12) and of circular and longitudinal struts (13, 15) which are connected to reception cavities (21) in the nodular elements (12), and with tension ropes (14) engaging on the nodular elements and bracing the circular and longitudinal struts (13, 15) on the nodular elements (12) and forming, together with the geodetic hull, a three-dimensional grid structure, characterized in that the circular and longitudinal struts (13, 15) are designed as closed triangular hollow sections (13, 15) and fit in- or onto matching reception cavities (21) running in the longitudinal and peripheral alignments of the geodetic hull, in that a base (27) of each of the triangular hollow sections (13, 15) faces the exterior of the geodetic hull and in that the corners of the outwardly-facing base (27) of the longitudinal struts (15) are equipped with linear slots (26), broadening towards their interior and fining flush with matching linear slots (26) on the outsides (27) of the nodular elements (12), and in that panels (19), equipped with swellings (20) at their edges and forming the airship body skin, are inserted into the linear slots.

2. An airship as claimed in Claim 1, characterized in that the nodular elements (12) are formed in one piece with reception cavities (21) and ribs (22, 24), the reception cavities (21) for the triangular hollow sections (13, 15) being arranged in a plane at an angle of 90° to one another, the ribs (22) projecting across the inwardly-directed corners having suspension eyes (23) for the tension ropes (14) and the ribs (24), lying roughly in the plane of the skin and connecting the corner areas of the outward-facing base (27) of the reception cavities (21) for the triangular hollow sections (13,15), having suspension eyes (25) for the tension ropes (14).

3. An airship as claimed in Claim 1 or 2, characterized in that the nodular elements (12) together with the circular struts (13) and the tension ropes (14) form braced multi-cornered framework rings (2), the bracing in the plane of each framework ring being directed from nodule to nodule in such a way that a network of crossed tension ropes (14) spanning roughly the outer third of the area of the ring is produced.

4. An airship as claimed in one or more of Claims 1 to 3, characterized by a payload space (7) designed as a self-contained frame structure arranged in the lower area of the geodetic hull.

5. An airship as claimed in Claim 4, characterized by at least one intrinsically rigid, vehicle-bearing payload pallet (60) lowerably connected to the geodetic hull, forming the floor of the payload space (7) and closing it off.

6. An airship as claimed in Claim 5, characterized in that the floor of the payload space (7) is formed from several pallets (60), which may be lowered independently of one another and whose width corresponds to that of the payload space (7) and whose length corresponds to the distance between two adjacent rings (2) of the geodetic hull.

7. An airship as claimed in Claim 6, characterized in that the first and/or last payload pallet (60) in the longitudinal alignment of the airship are designed as entry and exit ramps.

8. An airship as claimed in one of Claims 5 to 7, characterized by anchoring elements each running between one payload pallet (60) and the airship (1) landing area.

9. An airship as claimed in one of Claims 1 to 8, characterized in that the panels (19) forming the airship body skin are made of plastic with reinforcing fibres embedded at least in the swellings (20) at their edges.

10. An airship as claimed in one of Claims 3 to 9, characterized by buoyant gas compartments (29) suspended within the geodetic hull on the framework rings (2) by means of tension ropes (49), regularly distributed on the periphery of the buoyant gas compartment skin and aligned essentially radially to its transverse central plane (50), and characterized by a bracing rope complex (56, 57, 59) for the buoyant gas compartment skin, aligned essentially radially and axially within at least one buoyant gas compartment (13), and characterized by a winch drive (58) engaging on the bracing rope complex (56, 57, 59) for adjusting the volume of the buoyant gas compartment.

11. An airship as claimed in Claim 10, characterized in that the tension ropes (49) suspended on the rings (2) in a longitudinal plane (51) on adjacent framework rings (2) are each connected to one another in pairs within the buoyant gas compartments (29) by means of a rope (52) and that these ropes (52) are stretched radially within the buoyant gas compartments (29).

12. An airship as claimed in Claim 11, characterized in that the ropes (52) are braced by means of an annular tension rope arranged in the transverse central plane (50) of the buoyant gas compartment (29).

13. An airship as claimed in Claim 12, characterized in that rollers (55) are arranged on a bracing ring (54), or the annular tension rope, over which the ropes (56, 57, 59) of the bracing rope complex are guided to the winch drive (58) for adjustment of the gas compartment volume.

## Revendications

1. Dirigeable pour le transport de marchandises et de voyageurs comportant un fuselage en treillis constitué de noeuds (12) ainsi que de poutres annulaires et longerons (13, 15) reliés à des logements (21) des noeuds (12), et comportant des câbles de tension (14) qui agissent sur les noeuds, assujetissent les poutres annulaires et longerons (13, 15) aux noeuds et qui forment un treillis spatial avec le fuselage en treillis, caractérisé en ce que les poutres annulaires et longerons (13, 15) sont réalisés entant que profilés creux triangulaires fermés qui sont respectivement emboîtés dans et enfilés sur des logements (21) correspondants s'étendant respectivement dans la direction périphérique et dans la direction longitudinale du fuselage en treillis, tandis qu'une base (27) des profilés creux triangulaires (13, 15) est dirigée vers le côté extérieur du fuselage en treillis, en ce que les arêtes de la base (27) des longerons (15) présentent des fentes longitudinales (26) qui s'élargissent vers l'intérieur et qui sont alignées avec des fentes longitudinales (26) correspondantes sur les côtés extérieurs (27) des noeuds (12), et en ce qu'à l'intérieur des fentes longitudinales (26) sont enfilées des bandes (19) qui sont pourvues de bourrelets de bordure (20) et qui forment l'enveloppe du dirigeable.

2. Dirigeable selon la revendication 1, caractérisé en ce que les noeuds (12) sont constitués d'une seule pièce de logements (21) disposés dans un plan sous un angle de 90°, pour les profilés creux triangulaires (13, 15), et de nervures (22) qui longent les arêtes dirigées vers l'intérieur et qui comportent des oeillets d'accrochage (23) pour les câbles de tension (14), ainsi que de nervures (24) qui sont situées à peu près dans le plan de l'enveloppe et qui relient les zones des arêtes de la base (27), dirigée vers le côté extérieur, des logements (21) destinés aux profilés creux triangulaires (13, 15), à des oeillets d'accrochage (25) pour les câbles de tension (14).

3. Dirigeable selon la revendication 1 ou 2, caractérisé en ce que les noeuds (12) forment avec les poutres annulaires (13) et les câbles de tension (14) des anneaux de charpente polygonaux (2) haubanés, le haubanage étant réalisé dans le plan de l'anneau de charpente, d'un noeud à l'autre, de manière à obtenir un réseau de câbles de tension (14) se croisant, qui recouvre environ le tiers extérieur de la surface annulaire.

4. Dirigeable selon un ou plusieurs des revendications 1 à 3, caractérisé par une soute (7) pour la charge utile, réalisée sous la forme d'une construction en treillis autoportante et disposée dans la zone inférieure du fuselage en treillis.

5. Dirigeable selon la revendication 4, caractérisé par au moins une palette (60) pour la charge utile qui est rigide en soi, carrossable, fixée au fuselage en treillis de manière à pouvoir être abaissée, qui forme le plancher de la soute (7) et qui ferme cette dernière.

6. Dirigeable selon la revendication 5, caractérisé en ce que le plancher de la soute (7) est formé par plusieurs palettes (60) pouvant être abaissées indépendamment les unes des autres, dont la largeur correspond à celle de la soute (7) et dont la longueur correspond à la distance entre deux anneaux voisins (2) du fuselage en treillis.

7. Dirigeable selon la revendication 6, caractérisé en ce que la première et/ou la dernière palette (60) dans le sens longitudinal du dirigeable sont réalisées en tant que rampes d'accès et de sortie.

8. Dirigeable selon l'une des revendications 5 à 7, caractérisé par des éléments d'ancrage entre chaque palette (60) et le terrain d'atterrissage du dirigeable (1).

9. Dirigeable selon l'une des revendications 1 à 8, caractérisé en ce que les bandes (19) en matière plastique qui forment l'enveloppe du dirigeable sont constituées de fibres de renfort incluses au moins dans le bourrelet de bordure (20).

10. Dirigeable selon l'une des revendications 3 à 9, caractérisé par des cellules (29) de gaz de sustentation accrochées à l'intérieur du fuselage en treillis sur les anneaux de charpente (2) au moyen de câbles de tension (49) qui sont régulièrement répartis sur le pourtour de l'enveloppe des cellules de gaz de sustentation et dirigés sensiblement radialement par rapport au plan médian transversal (50), par un haubanage (56, 57, 59) s'étendant sensiblement radialement et axialement par rapport à l'enveloppe des cellules de gaz de sustentation et par une commande par treuil (58) agissant sur le haubanage (56, 57, 59) pour le réglage du volume des cellules de gaz de sustentation.

11. Dirigeable selon la revendication 10, caractérisé en ce que les câbles de tension (49) suspendus dans un plan longitudinal (51) à des anneaux de charpente (2) voisins sont reliés entre eux deux par deux à l'intérieur des cellules (29) de gaz de sustentation au moyen d'un câble (52) et ces câbles (52) sont déformés radialement à l'intérieur des cellules (29) de gaz de sustentation.

12. Dirigeable selon la revendication 11, caractérisé en ce que les câbles (52) sont déformés au moyen d'un câble de tension annulaire disposé dans le plan médian transversal (50) de la cellule (29) des gaz de sustentation.

13. Dirigeable selon la revendication 12, caractérisé en ce que sur un anneau de tension (54) ou sur le câble de tension annulaire sont disposées des poulies de renvoi (55) par lesquelles les câbles (56, 57, 59) du haubanage sont guidés vers la commande par treuil (58) pour le réglage du volume des cellules de gaz.
